# EUROPÄISCHE PATENTSCHRIFT

(11) **EP 0 515 354 B1**
(45) Veröffentlichungstag und Bekanntmachung des Hinweises auf die Patenterteilung: **08.07.1998**
(21) Anmeldenummer: 92890122.2
(22) Anmeldetag: 20.05.1992
(51) Int. Cl.: H01M 10/44, H01M 12/08, H01M 2/40

(54) **Verfahren zum Laden einer Mehrzahl von Batterien**
Method for charging a plurality of batteries
Procédé de charge d'une pluralité de batteries

(30) Priorität: 24.05.1991 AT 1062/91
(43) Veröffentlichungstag der Anmeldung: 25.11.1992
(73) Patentinhaber: ELIN EBG Elektrotechnik GmbH, 4020 Linz (AT)
(72) Erfinder: Tomazic, Gerd, Dipl.-Ing. Dr., A-8680 Mürzzuschlag (AT)
(74) Vertreter: Rieberer, Stefan, Dipl.-Ing.

(56) Entgegenhaltungen:
- EP-A- 0 135 056
- EP-A- 0 228 361
- US-A- 4 696 870

## Beschreibung

Die Erfindung bezieht sich auf ein Verfahren zum Laden einer Mehrzahl von Batterien, wobei in jeder Batterie zumindest zeitweise, insbesondere ganzzeitig, wässrige Elektrolytflüssigkeiten in den einzelnen Anoden- bzw. einzelnen Kathodenräumen einer Batterie ein- und ausgeleitet werden.

Aus der EP 228 361 ist ein galvanisches Element und Verfahren zur Speicherung und Abgabe von elektrischer Energie bekannt, bei dem der Elektrolyt durch Pumpen durch eine Vielzahl von Zellen, die aus bipolaren, kunststoffgebundenen. Kohlenstoff enthaltenden Elektroden und Separatoren gebildet sind, durchgepumpt wird. Die Elektrolyte werden jeweils aus den zugehörigen Elektrolytvorratsbehältern über Verteiler und Verbindungsleitungen in die Elektrodenräume gepumpt und fließen über Sammelleitungen in diese zurück.

Elektrische Energie läßt sich mit besonders hohem Wirkungsgrad in thermische und kinetische Energie umwandeln. Damit ist dem Einsatz von elektrischer Energie bei stationären Systemen ein weites Einsatzgebiet gegeben. Dem Vorteil der leichten Umwandlung, insbesondere in kinetische Energie, steht bei mobilen Systemen die schlechte Speicherfähigkeit gegenüber. Kommen Batterien bei mobilen Systemen, wie beispielsweise Kraftfahrzeugen, zum Einsatz, so soll ein möglichst geringes Gewicht pro zu speichernder elektrischer Einheit erhalten werden, um den Energieaufwand für den Transport des Speichers möglichst gering zu halten. Weiters muß, um einen möglichst weiten Einsatzbereich zu gewährleisten, die gespeicherte Strommenge optimiert werden, um die Reichweite eines derartigen Fahrzeuges so groß zu halten, daß sie z. B. größer ist als die üblicherweise an einem Tag zurückgelegte Strecke, damit die Stillstandzeiten zum Laden der Batterie verwendet werden können.

Auch bei einer Vielzahl von stationären Systemen ist die Bereitstellung einer Mindeststrommenge erforderlich, um bei Ausfall der Netzenergie ein klagloses Weiterfunktionieren sicherzustellen. Derartige Systeme sind beispielsweise für Spitäler als Notstromquelle für Notstrombeleuchtungen, als Speicher für den Normalbetrieb bei diskontinuierlich arbeitenden Energieumwandlungssystemen, wie z. B. Solarenergie, Windenergie, Gezeitenkraftwerken u. dgl., von besonderem Interesse.

Um einen besonders hohen Wirkungsgrad zu gewährleisten und weiters, um eine besonders einfache Ersatzmöglichkeit zu erbringen, sollen diese Energiespeicher eine möglichst hohe Spannung aufweisen.

Die Kapazität einer Batterie ist direkt von der Elektrolytmenge abhängig. Bei einer Zink-Brom-Batterie, wie sie beispielsweise in der EP A1 0327528 beschrieben ist, ist zur Erhöhung der Elektrolytmenge ein umlaufendes Elektrolytsystem vorgesehen. Bei dem Laden wird an der Kathode ein möglichst gleichförmiger Zinkfilm abgeschieden, wobei gleichzeitig an der Anode Brom zur Abscheidung gelangt. Dieses Brom bildet mit einem im wässrigen Elektrolyten vorgesehenen Komplexbildner einen im wesentlichen im wässrigen Elektrolyten nur schwer löslichen Bromkomplex, so daß das Brom, ähnlich wie das Zink, einer Speicherung zugeführt werden kann. Dadurch, daß der Bromkomplex in der wässrigen Phase im wesentlichen unlöslich ist, wird eine Suspension gebildet, und es scheidet sich im Behälter für den Anolyten am Boden der Bromkomplex ab. Die oberste Kapazitätsgrenze einer derartigen Batterie wird somit durch den Kathodenraum, und zwar durch die Möglichkeit der Menge Zink abzuscheiden und durch die Speichergröße der Vorratsgefäße für die Elektrolytflüssigkeit, gebildet. Die Leistungsnahme, also Entnahme von Strommenge pro Zeiteinheit, richtet sich zuerst nach der Elektrodenfläche. Die Spannung einer derartigen Batterie richtet sich danach, wieviele Zellen in Serie geschaltet sind. Um elektrochemisch möglichst gleiche Bedingungen zu schaffen, werden umlaufende Elektrolytflüssigkeiten bei einer Batterie in hydrauliscner Parallelschaltung den Kathoden- bzw. Anodenraumen zugeleitet. Damit ist eine uniforme Konzentration an allen Bestandteilen des Elektrolyten gewährleistet, wobei weiters aucn eine einheitliche Temperatur, die ebenfalls von besonders hoher Bedeutung ist, realisiert werden kann.

Umlaufende Elektrolytsysteme wirken zwar einerseits kapazitätserhöhend für eine Batterie, bewirken allerdings anderseits mit steigender Anzahl der in Serie geschalteten Elektroden, also steigender Spannung, durch die Elektrolytflüssigkeit vagabundierende Ströme, welche insbesondere bei höheren Spannungen zu einer stetigen Entladung führen. Diese Entladung tritt jedoch nicht nur im Stillstand, sondern auch bei Stromentnahme auf. Um zu hohe Stromverluste zu vermeiden, ist es bereits bekannt, die einzelnen Elektrolyträume durch einen Leiter zweiter Ordnung mit von Zelle zu Zelle variierenden Widerstand zu verbinden. Die einfachste Ausführungsform besteht darin, daß die Elektrolyträume durch einen Verbindungskanal mit abnehmendem und wieder zunehmendem Querschnitt verbunden sind. Eine derartige Kompensation fur vagabundierende Ströme ist jedoch einerseits mit Energieaufwand verbunden und verursacht auch bei reiner Bereitstellungsfunktion der Batterie für laufenden Energieverbrauch. Diese in der Batterie vorliegenden Ströme bewirken teilweise eine Auflösung und Wiederabscheidung des Zinkfilmes, so daß alleine durch Lagerung der geladenen Batterie hohe Kapazitätsverluste eintreten können. Zur Vermeidung dieser unerwünschten Ströme wurde bereits gemäß EP B1 0168377 vorgeschlagen, in Stillstandzeiten die hydraulische Verbindung zwischen den einzelnen Kathoden- bzw. Anodenraumen durch geeignete Absperrorgane, z. B. Hähnen, Schiebern od. dgl., zu unterbinden. Damit kann zwar während der Stillstandzeiten sichergestellt werden, daß kein Strom von der Batterie intern verbraucht wird. Eine Umladung innerhalb der Batterie, bzw. wenn mehrere Batterien in Serie geschaltet sind, zwischen diesen Batterien während einer Stromentnahme, kann jedoch nicht verhindert werden.

Um eine möglichst uniforme Ladung von Batterien bzw. Teilpaketen von Elektroden zu gewährleisten, können diese zum Laden in Parallelschaltung geschalten werden und zur Betriebsstromentnahme, um die Spannung möglichst hoch zu halten, in Serie geschaltet werden.

Die Erfindung hat sich zum Ziel gesetzt, ein Verfahren zum Laden einer Mehrzahl von elektrochemischen Speichern, Zellen, Zellenpaketen, insbesondere von Batterien, zu schaffen, bei welchem sowohl während des Ladens als auch bei der Energieentnahme Verluste durch gegenseitige Ladung und Entladung einzelner Zellen, Zellenpakete bzw. Batterien untereinander weitgehendst vermieden werden.

Das erfindungsgemäße Verfahren zum Laden einer Mehrzahl von elektrochemischen Speichern, Zellen, Zellenpaketen, insbesondere von Batterien, wobei in jedem Speicher zumindest zeitweise, insbesondere ganzzeitig, wäßrige Elektrolytflüssigkeiten in den einzelnen Anoden- bzw. einzelnen Kathodenräumen in hydraulischer Parallelschaltung ein- und ausgeleitet werden, wobei während des Ladens an der Kathode metallisches Zink als Schichte und an die Anode Brom abgeschieden wird, das in einem Wasser schwer löslichen Komplex mit einem im wäßrigen Elektrolyten gelösten Komplexbildner, z. B. Morpholinderivat, umgewandet wird, wobei für jede Elektrolytflussigkeit ein eigener Kreislauf und eigene Vorratsbehälter als auch Pumpen vorgesehen sind, bestent im wesentlichen darin, daß während des Ladevorganges in zeitlichen Abständen der Ladezustand der elektrochemischen Speicher bestimmt wird, und bei einem vorgegebenen Wert der Ladevorgang des jeweiligen Speichers abgebrochen wird. Zellen mit einer Kathode und Anode und dazwischengeschalteten Diaphragma bilden die kleinste Einheit einer Batterie, und es kann bereits zwischen den einzelnen Zellen, wenn ein umlaufendes Elektrolytsystem vorgesehen ist, zu Umladungen kommen. Derartige Umladungen sind insbesondere bei ungleich dimensionierten Zellen, beispielsweise Innenwiderstande u. dgl., bedingt. Unter einzelnen Zellenpaketen soll eine Mehrzahl von einzelnen Zellen verstanden sein, die in Serie geschaltet sind und auch zumindest gemeinsam in Serie aufgeladen werden. Dazu ist es beispielsweise erforderlich, daß eine zusätzliche Elektrode am Beginn und Ende des Zellenpaketes vorgesehen ist, die zur Zu- und Ableitung des Strcmes dienen. Unter einer Batterie soll eine Vielzahl von galvanischen Zellen verstanden werden, die gemeinsam einen Analyt- und einen Kathalytkreislauf aufweisen, in welchem jeweils zumindest ein Förderorgan, z. B. Pumpe, vorgesehen ist. An den jeweiligen Endelektroden ist eine elektrische Zu- bzw. Ableitung vorgesehen, wobei auch an einer Elektrode zwischen diesen Zu- und Ableitungen eine weitere elektrische Verbindung vorgesehen sein kann. Wie aus obigen Ausführungen hervorgeht, besteht der wesentliche Unterschied zwischen galvanischen Zellen und Zellenpaketen darin, daß Zellenpakete aus einer Mehrzahl von galvanischen Zellen besteht und zwischen Zellenpaketen und Batterien darin, daß zwar Zellenpakete gemeinsame elektrische Zu- und Ableitungen besitzen, jedoch Batterien sowohl elektrische Zu- und Ableitungen als auch jeweils eigene Elektrolytzu- und -ableitsysteme zu den einzelnen Elektrodenräumen mit eigenen Vorratsgefäßen und eigenen Forderorganen, z. B. Pumpen, aufweisen.

Dadurch, daß während des Ladens der elektrochemischen Speicher, also der einzelnen Zellen bzw. Zellenpaketen, insbesondere Batterien, der Ladezustand derselben überprüft und bei Erreichen eines bestimmten Ladezustandes der Ladevorgang unterbrochen wird, kann auf besonders einfache und wirksame Weise ein gleicher Ladezustand zwischen den einzelnen Speichern erreicht werden, so daß ein Umladen und damit bedingte elektrochemische Verluste besonders einfach vermieden werden. Verstarkte Umladevorgänge treten bei Zink-Brom-Batterien mit umlaufenden Elektrolytsystemen ab ca. 30 bis 40 Volt auf, so daß entweder derartige Batterien bzw. Zellenpakete bevorzugt für das erfindungsgemäße Verfahren zum Einsatz kommen. Die Umladevorgänge können auch durch Unterschiede der Separatoren, der Selbstentladung u. dgl. auftreten.

Ein besonders einfaches Ladeverfahren ergibt sich dann, wenn während des Ladevorganges die Speicher elektrisch parallel geschaltet werden, wobei jeder Speicher für sich vom Ladevorgang abschaltbar ist. Mit einer derartigen Vorgangsweise kann einerseits besonders einfach eine gleiche Ladespannung und Stromstärke für theoretisch mit gleicher Spannung vorgesehenen Speichern erreicht werden, wobei den Unterschieden der stochastisch auftretenden Ladungszustände durch die individuelle Abschaltung einzelner Speicher besonders vorteilhaft Rechnung getragen werden kann.

Wird der Ladungszustand an den einzelnen bzw. vereinzelten Speichern durch Spannungsmessung derselben bestimmt, wobei die Spannungsmessung beispielsweise unter einer vorgegebenen Belastung erfolgt, so kann insbesondere bei Zink-Brom-Batterien auf besonders einfache Art und Weise der Ladezustand bestimmt werden.

Erfolgt die Ladung der Speicher über eine gemeine Primärwicklung eines elektrischen Transformators und jeweilige dem Speicher zugeordnete Sekundarwicklungen mit Gleichrichtern, so kann auf besonders einfache Weise Leistungsänderungen des Primärnetzes Rechnung getragen werden, ohne daß dadurch ein erhöhter Meß- und dadurch Zeitaufwand bei den einzelnen elektrochemischen Speichern bedingt ist.

Wird zur Bestimmung des Ladezustandes die elektrische Verbindung zur Ladestromquelle aller Speicher über einen Schalter unterbrochen und der Ladezustand der einzelnen Speicher bestimmt, so kann auf besonders zeitextensive Weise der Ladezustand der einzelnen Speicher überprüft werden und eine Angleichung der Speicher in ihrer Kapazität zeitgleich erfolgen.

Werden während der Bestimmung des Ladezustandes die Elektrolytflüssigkeiten im Umlauf gehalten, so kann auf besonders wirksame Weise ein in Grenzen variabler Parameter zur Bestimmung miteinbezogen werden, wobei selbst bei längeren Meßvorgängen keine Verfälschung des aktuellen Ladezustandes eintritt.

Ist zur Betätigung des Schalters eine Memorylegierung mit Heizung, insbesondere elektrischer Heizung, vorgesehen, so können Schaltvorgänge mit hohen Schaltleistungen bei besonders niedriger Energieaufnahme durchgeführt werden.

Weist der Schalter eine Stellung auf, in welcher die Speicher elektrisch in Serie geschaltet werden, so kann mit ein und demselben Schalter sowohl der Ladevorgang als auch die Entnahme der elektrischen Energie mit hoher Spannung vorgesehen sein.

Wird die Memorylegierung des Schalters während des Ladens, insbesondere elektrisch, beheizt, so kann mit Ende des Ladevorganges und dadurch Ende der Erwärmung des Memoryschaltgliedes der Schaitvorgang, z. B. von parallel auf Serie, der einzelnen Speicher besonders einfach durchgeführt werden, wobei die Schaltenergie vom Netz und nicht vom Speicner entnommen wird.

Wird bei elektrisch seriell geschalteten elektrischen Speichern, Zellenpaketen und/oder Batterien die Reihenfolge dieser geändert, so daß bei zwei Speichern die elektrische Zu- und Ableitung, welche mit dem Verbrauch verbindbar waren, miteinander, und die andere Zu- und Ableitung, welche miteinander verbunden waren, mit dem elektrischen Verbraucher verbindbar, so kommt es zu einer anderen Spannungsverteilung und damit Stromfluß in den Elektrolytzu- und -ableitungen, so daß es zur Auflösung von unerwünschten Zinkablagerungen u. dgl. kommen kann. Anstelle des elektrischen Verbrauchers kann auch das Ladegerät geschalten werden, wobei dann der Vorteil entsteht, daß die Ströme zum Umladen aus dem Netz stammen, wodurch eine zusätzliche Erhöhung der Kapazität der Batterie erreichbar ist.

Im folgenden wird die Erfindung anhand der Zeichnungen näher erläutert.

Es zeigen:
Fig. 1 einen elektrochemischen Speicher mit Zu- und Ableitung einer Elektrolytflüssigkeit,
Fig. 2 einen Schieber,
Fig. 3 das elektrische Schaltbild der elektrochemischen Speicher,
Fig. 4 ein Diagramm der Abhängigkeit zwischen Ladezustand und Spannung eines elektrochemischen Speichers und
Fig. 5. einen elektrochemischen Speicher mit Spannungsmeßvorrichtung.

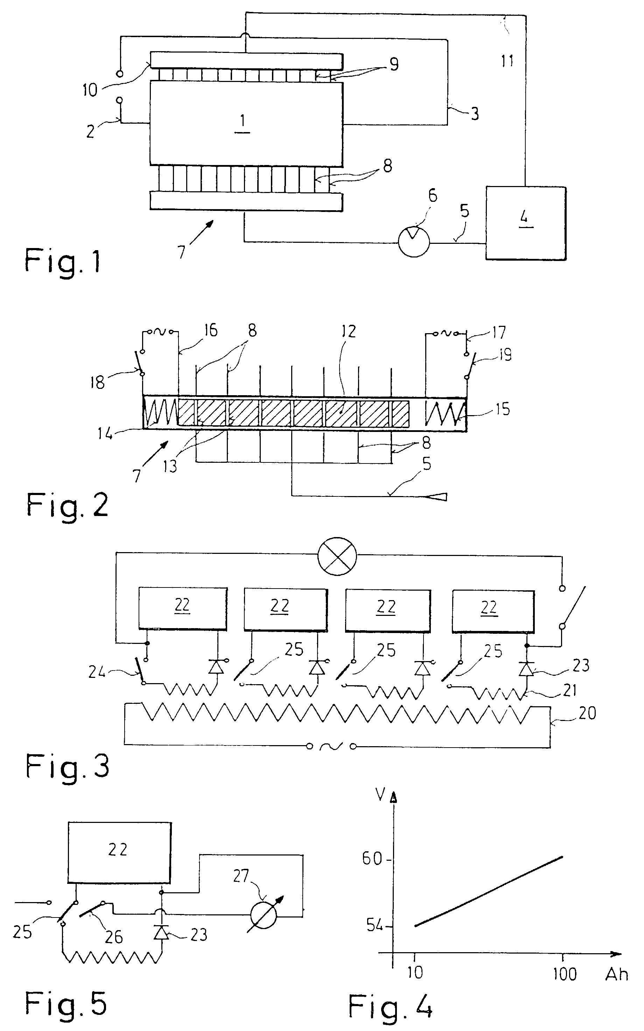

Der in Fig. 1 dargestellte elektrochemische Speicher 1 ist eine Batterie, die aus einer Vielzahl nicht dargestellter bipolaren Elektroden aufgebaut ist. Die Elektroden selbst weisen einen Mittelbereich auf, der aus kohlenstoffgebundenem Kunststoff aufgebaut ist, der von einem nicht leitenden elektrischen Kunststoff umgeben ist. Dieser Rand ist seinerseits mit zwischen den Elektroden angeordneten Diaphragmen aus Kunststoff verschweißt, wodurch Katholyt- und Anolyträume gebildet werden. Die jeweiligen Endelektroden weisen Kollektoren auf, durch welche der Strom abgeleitet wird und über Leiter 2, 3 einem Verbraucher zugeführt werden können. Zur Vereinfachung ist lediglich ein hydraulischer Kreislauf dargestellt, obwohl jeder elektrochemische Speicher sowohl für den Anolyten als auch für den Katholyten einen derartigen Kreislauf aufweist. Aus dem Vorratsbehälter 4 gelangt über die Leitung 5 und Pumpe 6 der Elektrolyt in den Schieber 7, der gleichzeitig ein Sammler ist, in welchem die Flüssigkeit in die einzelnen Elektrodenräume verteilt zugeleitet wird, wobei die Zuleitung über die Leitungen 8 erfolgt. Die Ableitung aus den einzelnen Elektrodenräumen erfolgt über Leitungen 9, Schieber 10, der gleichzeitig ein Sammler ist und Ableitung 11. Sowohl während des Ladens als auch des Entladens als auch der Überprüfung des Ladezustandes und während der Stromentnahme wird durch die Pumpe 6 der Elektrolyt im Umlauf gehalten. Während des Ladevorganges wird Zink bzw. Brom an den Elektroden abgeschieden. Das Zink bildet einen auf der Elektrode haftenden Belag aus, wohingegen das Brom durch einen im wäßrigen Elektrolyten gelösten Komplexbildner zu einem wasserschwerlöslichen Komplex umgewandelt wird, der als wäßrige Suspension aus den Elektrodenräumen abgesaugt bzw. in diese eingebracht wird. Als Komplexbildner haben sich quarternäre Ammoniumsalze, wie z. B. Pyrrolidiniumsalze und dergleichen, bewährt.

Der in Fig. 2 dargestellte Schieber 7 weist eine Leitung 5 auf, die in Leitungen 8 aufgegliedert wird, die sodann in die einzelnen Elektrolyträume führen. Im Schieber ist ein Sperrorgan 12 vorgesehen, das Bohrungen 13 aufweist, die in der Offenstellung die Leitungen 8 verbinden. Der Schieber kann durch Federn 14 und 15 aus einer Memorylegierung mit elektrischem Heizschaltkreis 16, 17 und Schaltern 18, 19 betätigt werden. Wie bekannt, weisen Memorylegierungen die Eigenschaft auf, bei einer bestimmten Temperatur, die zweckvollerweise nicht mit der Raumtemperatur übereinstimmt, ihre ursprüngliche Form anzunehmen. Wird also eine Feder aus Memorymetall erhitzt, so nimmt diese Feder die ursprüngliche Form an, so daß das Sperrorgan je nach Schließen der Schalter 18 bzw. 19 geschoben werden kann. Ein Schalter für die elektrischen Verbindungen, und zwar Laden durch die einzelnen Sekundärstromkreise eines Transformators, Messen des Ladezustandes, vollständiges Unterbrechen der elektrischen Verbindungen und in Serie schalten der einzelnen elektrochemischen Speicher, kann in analoger Weise mit Memorylegierungen durchgeführt werden.

Bei dem in Fig. 3 dargestellten Schaltschema liegen an der Primärwicklung 20 eines Transformators Sekundärwicklungen 21. Zur Ladung der elektrochemischen Speicher 22 ist eine Gleichrichtung des Stromes durch Gleichrichter 23 erforderlich. In jedem Sekundärstromkreis sind Schalter 24 bzw. 25 vorgesehen. Mit Ausnahme des Schalters 24, der lediglich eine Ein/Aus-Stellung aufweist, weisen die Schalter 25 zwei Stellungen auf, wobei einerseits der Ladestromkreis geschlossen werden kann bzw. anderseits eine Serienschaltung der elektrochemischen Speicher durchgeführt wird.

Wie in Fig. 5 dargestellt, ist ein weiterer Schalter 26 vorgesehen, der zum Anschließen des Voltmeters 27 an den elektrochemischen Speicher 22 dient, so daß der jeweilige Ladungszustand überprüft werden kann.

Der Zusammenhang zwischen Spannung und Ladekapazität ist in Fig. 4 dargestellt. Bei einem elektrochemischen Speicher mit 100 Amperestunden steigt bei einer bestimmten Strombelastung die Spannung bei 10 %iger Ladung von 54 Volt auf 58,75 Volt bei 80 %iger Ladekapazität. Die Ladekapazität kann auch auf andere Art und Weise bestimmt werden. So ist beispielsweise die Abnahme der Leitfähigkeit der Elektrolytflüssigkeit durch Reduzierung der Zinkionen im Elektrolyten eine Meßgröße, aber es kann beispielsweise auch die Menge des gebildeten Bromkomplexes im Vorratsbehälter für den Elektrolyten, beispielsweise über geeignete Schwimmer, bestimmt werden.

Bei der Ladung der elektrochemischen Speicher wird nun so vorgegangen, daß über einen Transformator mit einer Primärwicklung und einer Vielzahl von Sekundärwicklungen gleiche elektrochemische Speicher geladen werden. In vorgegebenen Zeitabständen, die mit steigendem Ladezustand kürzer werden können, wird jeweils die Spannung der einzelnen elektrochemischen Speicher bestimmt. Überschreitet die Spannung eines oder mehrerer - der elektrochemischen Speicher 5 % des arithmetischen Mittels aller Speicher, so wird der Ladevorgang dieser elektrochemischen Speicher unterbrochen, um ein Angleichen der Ladekapazitäten der anderen elektrochemischen Speicher herbeizuführen. Bei der nächsten Ladekapazitätsüberprüfung werden sodann diese elektrochemischen Speicher wieder einer Ladung zugeführt. Auf diese Weise kann schrittweise eine möglichst gleichförmige Ladung aller einzelnen elektrochemischen Speicher durchgefuhrt werden.

Bei vier Batterien, die jeweils bei maximalem Ladezustand eine Spannung von 60 Volt aufwiesen und die Endverbrauchsschaltung in Serie geschaltet sind, konnte während des Ladens eine Energieersparnis von 9 % gegenüber der herkömmlichen Weise, und zwar der Messung der an den elektrochemischen Speicher abgegebenen Energie, erreicht werden. Auch war eine 14 %ige Erhöhung bei der Energieabgabe der in Serie geschalteten Batterien möglich. Diese Energieersparnis erklärt sich dadurch, daß Umladevorgänge zwischen den Batterien durch möglichst gleiche Ladezustände weitgehendst vermieden werden können.

Bei mehreren in Serie geschalteten Batterien kommt es, wie bereits angeführt, durch die vagabundierenden Ströme zu Umladungen und damit Abscheidungen von unerwünschten Zinkfilmen. Werden nun die Batterien in anderer Reihenfolge in Serie geschaltet, also werden beispielsweise bei zwei Batterien nach ein oder mehreren Lade- und Entladevorgängen die Elektroden, welche mit dem Verbraucher verbunden waren, sodann miteinander verbunden, und der Verbraucher bzw. das Ladegerat an die beiden restlichen Elektroden angeschlossen, so kann dadurch eine Änderung der vagabundierenden Ströme und damit Auflösung der unerwünschten Zinkfilme erreicht werden. Durch diese Vorgangsweise kann die Zeitspanne für den Einsatz von Batterien ohne zusätzliche Wartungsarbeiten um 50 % erhöht werden.

Als Kunststoffe, sowohl fur die Elektroden als auch die Diaphragmen, kommen beispielsweise Polyethylen, Polypropylen, Polyvinylchlorid od. dgl. in Frage. Vorraussetzung für den Kunststoff ist, daß er gegenüber Halogenen, insbesondere Brom, im wesentlichen chemisch inert ist. So können durchaus hochhalogenierte Kunststoffe, wie beispielsweise Polytetrafluorethylen oder andere Verwendung finden. Um eine elektrische Leitfähigkeit der Elektroden zu erhalten, können verschiedenste leitfähige Partikelchen, insbesondere Köhlepartikelchen, wie Aktivkohle, aber auch Graphit u. dgl. in dem Kunststoff der Elektrode eingebettet sein.

Memorylegierungen sind in der Literatur bestens bekannt und können beispielsweise auf Basis von Aluminium und Zink aufgebaut sein.

## Patentansprüche

1. Verfahren zum Laden einer Mehrzahl von elektrochemischen Speichern, Zellen, Zellenpaketen, insbesondere von Batterien, wobei in jedem Speicher zumindest zeitweise, insbesondere ganzzeitig, wäßrige Elektrolytflüssigkeiten in den einzelnen Anoden- bzw. Kathodenräumen in hydraulischer Parallelschaltung ein- und ausgeleitet werden, wobei während des Ladens an der Kathode metallisches Zink als Schichte und an der Anode Brom abgeschieden wird, das in einem wasserschwerlöslichen Komplex mit einem im wäßrigen Elektrolyten gelösten Komplexbildner umgewandelt wird, wobei für jede Elektrolytflüssigkeit ein eigener Kreislauf und ein eigener Vorratsbehälter als auch Pumpen vorgesehen sind, dadurch gekennzeichnet, daß während des Ladevorganges in zeitlichen Abständen der Ladezustand der einzelnen und/oder vereinzelten elektrochemischen Speicher bestimmt und erst bei einem vorgegebenen Wert der Ladevorgang des jeweiligen Speichers abgebrochen wird.

2. Verfahren nach Anspruch 1, dadurch gekennzeichnet, daß während des Ladevorganges die Speicher elektrisch parallel geschaltet werden, wobei jeder Speicher für sich vom Ladevorgang abschaltbar ist.

3. Verfahren nach Anspruch 1 oder 2, dadurch gekennzeichnet, daß der Ladezustand durch Spannungsmessung an den einzelnen Speichern bestimmt wird.

4. Verfahren nach Anspruch 1, 2 oder 3, dadurch gekennzeichnet, daß die Ladung der Speicher über eine gemeinsame Primärwicklung eines elektrischen Transformators und jeweilige dem Speicher zugeordnete Sekundärwicklungen mit Gleichrichtern erfolgt.

5. Verfahren nach einem der Ansprüche 1 bis 4, dadurch gekennzeichnet, daß zur Bestimmung des Ladezustandes die elektrische Verbindung zur Ladestromquelle aller Speicher über einen Schalter unterbrochen und der Ladezustand der einzelnen Speicher bestimmt wird.

6. Verfahren nach einem der Ansprüche 1 bis 5, dadurch gekennzeichnet, daß während der Bestimmung des Ladezustandes die Elektrolytflüssigkeiten im Umlauf gehalten werden.

7. Verfahren nach Anspruch 5 oder 6, dadurch gekennzeichnet, daß zur Betätigung des Schalters eine Memorylegierung mit, insbesondere elektrischer, Heizung vorgesehen ist.

8. Verfahren nach Anspruch 7, dadurch gekennzeichnet, daß der Schalter Stellungen aufweist, in welcher die Speicher, Zellenpakete und/oder Batterien in verschiedenen Verknüpfungen elektrisch seriell bzw. parallel geschaltet werden.

9. Verfahren nach Anspruch 7 oder 8, dadurch gekennzeichnet, daß die Memorylegierung des Schalters während des Ladens, insbesondere elektrisch, beheizt wird.

10. Verfahren nach einem der Ansprüche 1 bis 9, dadurch gekennzeichnet, daß bei elektrisch seriell geschalteten elektrischen Speichern, Zellenpaketen und/oder Batterien die Reihenfolge dieser geändert wird, so daß z. B. bei zwei Speichern die elektrische Zu- und Ableitung, welche mit dem Verbraucher verbunden waren, miteinander, und die anderen Zu- und Ableitungen, welche untereinander verbunden waren, mit dem elektrischen Verbraucher verbindbar werden.

11. Verfahren nach Anspruch 10, dadurch gekennzeichnet, daß die Verbindung anstelle des Verbrauchers mit einer Stromquelle erfolgt.

## Claims

1. A process for charging a plurality of electrochemical storage means, cells, cell packs and in particular batteries, wherein for each storage means and at least by intervals of time or, more particularly, permanently, liquid aqueous electrolytes are fed to and evacuated from the individual anode or cathode compartments arranged hydraulically in parallel, wherein during the charging, metallic zinc is precipitated at the cathode as a layer and bromine is formed at the anode, which bromine is transformed into a water-soluble complex with a complex builder soluble in the aqueous electrolyte, and wherein for each liquid electrolyte there is provided a separate circulation circuit with it own reservoir and pumps, characterised in that during the charging process, and at intervals of time, the state of charge of individual and/or of isolated electrochemical storage means is monitored and at a predetermined value, the process of charging the respective storage means is interrupted.

2. A process according to claim 1, characterised in that during the charging process, the storage means form an electrically parallel arrangement, wherein each individual storage means can be excluded from the charging process.

3. A process according to claim 1 or 2, characterised in that the state of charge is monitored by measuring the voltage of the individual storage means.

4. A process according to claim 1, 2 or 3, characterised in that the charging of the storage means is carried out using an electrical transformer with a common primary winding and secondary windings having each one a rectifier, specific for each one of the storage means.

5. A process according to one of claims 1 to 4, characterised in that for monitoring the state of charge, the electrical connection to the current supply from each storage means is interrupted by a switch and the state of charge of individual storage means is determined.

6. A process according to one of claims 1 to 6, characterised in that during the determination of the state of charge, the liquid electrolytes are kept circulating.

7. A process according to claim 5 or 6, characterised in that for controlling the storage means, there is provided a memory alloy, with heating, in particular electrical.

8. A process according to claim 7, characterised in that the switch has positions, in which the storage means, cell pack and/or batteries are connected electrically in different serial or parallel arrangements.

9. A process according to claim 7 or 8, characterised in that the memory alloy of the switch is heated during the charging, in particular electrically.

10. Process according to one of claims 1 to 9, characterised in that, in a serial electrical arrangement of the electrical storage means, cell packs and/or batteries, the order of these electrical storage means can be modified such that, for instance, the electrical supply and return lines of two storage means, which had been connected to the load, will be connected with each other, whereas the other supply and return lines, which had been connected with one another, will now become connectable to the electrical load.

11. A process according to claim 10, characterised in that the connections are made with a source of current instead of a load.

## Revendications

1. Procédé pour charger une pluralité de moyens d'emmagasinage électrochimiques, de cellules, d'empilements de cellules et, en particulier, de batteries, où, pour chaque moyen d'emmagasinage et au moins à des intervalles de temps ou, plus particulièrement de manière continue, les électrolytes liquides aqueux sont amenés vers et évacués hors des compartiments d'anode ou de cathode individuels constituant un agencement hydraulique en parallèle, où durant le chargement, du zinc métallique est précipité à la cathode sous la forme d'une couche et du brome est formé à l'anode, lequel brome est transformé en un complexe hydrosoluble par l'action d'un agent complexant soluble dans l'électrolyte aqueux, et où pour chaque électrolyte liquide, il est prévu un circuit de circulation séparé avec son réservoir propre et ses pompes, caractérisé en ce que durant le procédé de chargement et à des intervalles de temps, l'état de chargement des moyens d'emmagasinage électrochimiques individuels et/ou isolés est surveillé et à une valeur prédéterminée, le procédé de chargement du moyen d'emmagasinage respectif est interrompu.

2. Procédé selon la revendication 1, caractérisé en ce que durant le procédé de chargement, les moyens d'emmagasinage électriques sont disposés en parallèle, et en ce que chaque moyen d'emmagasinage individuel peut être exclu du procédé de chargement.

3. Procédé selon la revendication 1 ou 2, caractérisé en ce que l'état de chargement est surveillé en mesurant la tension des moyens d'emmagasinage individuels.

4. Procédé selon la revendication 1, 2 ou 3, caractérisé en ce que le chargement des moyens d'emmagasinage se fait avec un transformateur électrique ayant un enroulement primaire commun et des enroulements secondaires avec chacun un redresseur, spécifiques pour chacun des moyens d'emmagasinage.

5. Procédé selon une des revendications 1 à 4, caractérisé en ce que, pour surveiller l'état de chargement, la connexion électrique vers l'alimentation en courant de chaque moyen d'emmagasinage est interrompue par un commutateur et que l'état de chargement des moyens d'emmagasinage individuels est déterminé

6. Procédé selon une des revendications 1 à 6, caractérisé en ce que durant la détermination de l'état de chargement, les électrolytes liquides sont maintenus en circulation.

7. Procédé selon une des revendications 5 ou 6, caractérisé en ce que pour commander le moyen d'emmagasinage, il est prévu un alliage à mémoire, avec un chauffage, en particulier électrique.

8. Procédé selon la revendication 7, caractérisé en ce que le commutateur a des positions, dans lesquelles les moyens d'emmagasinage, les empilements de cellules et/ou les batteries sont connectés de différentes manières, en série ou en parallèle.

9. Procédé selon la revendication 7 ou la revendication 8, caractérisé en ce que l'alliage à mémoire du commutateur est chauffé durant le chargement, en particulier électriquement.

10. Procédé selon l'une quelconque des revendications 1 à 9, caractérisé en ce que, dans un agencement électrique en série des moyens d'emmagasinage électriques, des empilements de cellules et/ou des batteries, l'ordre de ces moyens d'emmagasinage peut être modifié pour que, par exemple, les lignes d'alimentation et de retour du courant électrique de deux moyens d'emmagasinage, qui étaient auparavant reliées à la charge soient connectées ensemble, pendant que les autres lignes d'alimentation et de retour, qui étaient connectées ensemble, puissent être connectées à la charge électrique.

11. Procédé selon la revendication 10, caractérisé en ce que les connexions sont réalisées avec une source de courant au lieu d'avec la charge.
